**Europäisches Patentamt**

**European Patent Office**

**Office européen des brevets**

(11) Veröffentlichungsnummer: **0 167 005**
**B1**

(12) **EUROPÄISCHE PATENTSCHRIFT**

(45) Veröffentlichungstag der Patentschrift:
**27.01.88**

(21) Anmeldenummer: **85106973.2**

(22) Anmeldetag: **05.06.85**

(51) Int. Cl.⁴: **A 61 C 8/00**

(54) **Kieferimplantat mit einer Bohrung zur Aufnahme eines Zahnersatzträgers.**

(30) Priorität: **06.06.84 DE 3421046**

(43) Veröffentlichungstag der Anmeldung:
**08.01.86 Patentblatt 86/2**

(45) Bekanntmachung des Hinweises auf die Patenterteilung:
**27.01.88 Patentblatt 88/4**

(84) Benannte Vertragsstaaten:
**AT BE CH DE FR GB IT LI LU NL SE**

(56) Entgegenhaltungen:
**EP - A - 0 075 525**
**AT - B - 263 200**
**DE - A - 2 549 114**
**DE - A - 2 743 035**
**DE - A - 3 246 644**
**DE - C - 583 421**
**DE - C - 837 294**
**GB - A - 2 063 680**

(73) Patentinhaber: **Feldmühle Aktiengesellschaft,**
**Fritz-Vomfelde-Platz 4, D-4000 Düsseldorf 11 (DE)**

(72) Erfinder: **Ehrl, Peter A., Dr. med. dent.,**
**Karl-von-Hahn-Strasse 28, D-7290 Freudenstadt (DE)**

ACTORUM AG

**Beschreibung**

Die vorliegende Erfindung betrifft ein Kieferimplantat mit einem auf das apikale Ende folgenden, ersten kegelstumpfförmigen Abschnitt, dessen Querschnittsfläche in koronaler Richtung zunimmt, einem zweiten kegelstumpfförmigen Abschnitt, der übergangslos auf den ersten Abschnitt folgt und dessen Querschnittsfläche in koronaler Richtung abnimmt, einem dritten, sich an diesen Abschnitt anschliessenden, zylindrisch ausgebildeten Abschnitt, sowie einem darauf folgenden vierten, kegelstumpfförmigen Abschnitt mit in koronaler Richtung zunehmender Querschnittsfläche, wobei die Höhe des ersten Abschnittes grösser als die des zweiten Abschnittes ist.

Kieferimplantate sind aus der DE-C-583 421 und aus DE-A-2 549 114 und DE-A-2 743 035 bereits bekannt. Gemäss der DE-C-583 421 wurde dabei ein in seiner äusseren Form der natürlichen Zahnwurzel ähnliches Implantat vorgeschlagen, während die jüngeren Vorschläge die Ausbildung von bestimmten Einschnürungen, senkrecht zur Implantatmittelachse stehenden Ringflächen, Abflachungen oder in Richtung auf das koronale Ende hin divergierende Bereiche mit kreisförmigem Querschnitt vorsehen, durch die das Einwachsen des Knochengewebes gefördert und ein besonders sicherer Sitz des Implantates erzielt werden soll. Der gemeinsame Nachteil dieser bekannten Kieferimplantate besteht darin, dass sie in dem Bereich, der zur Einlagerung in die Ephitel- und Knochendurchtrittsstelle vorgesehen ist, eine relativ grosse Querschnittsfläche aufweisen. Gemäss der DE-A-2 743 035 ist bei einem in koronaler Richtung divergierend verlaufenden Implantatpfosten vorgesehen, die Austrittsfläche des Pfostens auf dem Kieferknochen auf das geringstmögliche Mass zu beschränken, wozu an den divergierenden Bereich eine umgekehrte kegelförmige Mantelfläche anschliesst, jedoch weist auch bei diesem bekannten Implantat der in die Ephitel- und Knochendurchtrittsstelle einzusetzende Abschnitt noch eine sehr grosse Querschnittsfläche auf, wodurch die Gefahr besteht, dass in diesem Bereich eine Kraterbildung eintritt, weil sich das Knochengewebe hier nicht horizontal anlagert.

Ein Implantat der eingangs beschriebenen Art ist in der DE-A-3 246 644 beschrieben. Gemäss diesem Vorschlag soll das Wachstum und die Neubildung des Knochengewebes mittels elektrischen Stromkreisen im Bereich des apikalen Implantatteiles gefördert werden. Nachteilig bei diesem bekannten Implantat ist der sogenannte einphasige Aufbau, d.h.: der Zahnträger ist mit der eigentlichen «Zahnwurzel» bereits bei der Implantation verbunden. Dadurch besteht während der Einheilungsphase die Gefahr der Lockerung durch die an das Implantat anstossende Zunge. Bei diesem Vorschlag wird die Funktion des zylindrisch ausgebildeten Bereiches für den Kontakt mit dem Zahnfleischtragpolster angegeben, so dass der für den Bereich der Knochendurchtrittsstelle dienende Implantatbereich in nachteiliger Weise noch einen relativ grossen Querschnitt aufweist.

An diesem Punkt setzt die vorliegende Erfindung an, deren Aufgabe in der Entwicklung eines Implantates besteht, das infolge seiner Form ein verbessertes Einwachsverhalten zeigt und insbesondere die nachteilige Kraterbildung besser als bisher vermeiden soll, so dass das Implantat nach der Einheilungsphase einen festen Sitz erhält und auftretenden Abzugskräften gegenüber einen ausreichend hohen Widerstand entgegensetzt.

Zur Lösung dieser Aufgabe sieht die Erfindung die kennzeichnenden Merkmale von Anspruch 1 vor. Der in Ansprüchen und Beschreibung verwendete Begriff «elliptisch» umfasst auch eine ovale Querschnittsform des Kieferimplantates. Unter zylindrischer Ausbildung ist zu verstehen, dass die Aussenkonturen parallel zur Längsachse verlaufen.

Durch die Ausbildung des auf das apikale Ende folgenden kegelstumpfförmigen ersten Abschnittes mit einem elliptischen Querschnitt erhält das Implantat eine weitestgehende Verdrehsicherung. Dadurch wird bereits von Anfang an eine gewisse Fixierung des Implantates erreicht und der Einheilungsprozess stärker als bei den bisherigen Implantaten, die in diesem Bereich kegelstumpfförmig mit kreisförmigem Querschnitt ausgebildet waren, gefördert. Da das erfindungsgemässe Kieferimplantat in seinem zur Einlagerung in die Corticalis vorgesehenen Abschnitt zylindrisch ausgebildet ist, wobei dieser Abschnitt zwischen zwei kegelstumpfförmigen Abschnitten liegt, von denen sowohl der apikalseitige als auch der koronalseitige Abschnitt mit ihrer kleineren Querschnittsfläche an diesen zylindrischen Abschnitt angrenzen, weist dieser zur Einlagerung in die Corticalis vorgesehene Bereich eine sehr geringe Querschnittsfläche auf, so dass hier eine horizontale Anlagerung des Knochengewebes erfolgen kann, wodurch die nachteilige Kraterbildung weitestgehend unterbleibt. Nach erfolgtem Einheilungsprozess setzt die kegelstumpfförmige Form des Abschnittes, der auf den Kugelabschnitt folgt, auftretenden Abzugskräften einen ausreichend hohen Widerstand entgegen. Ein weiterer Vorteil liegt bei dem erfindungsgemässen Kieferimplantat infolge der elliptische Querschnitte aufweisenden Abschnitte darin, dass das Implantat auch an solchen Stellen im Kieferkamm eingesetzt werden kann, an denen eine gewisse Kieferatrophie eingetreten ist, d.h.: der Kieferkamm sich an dieser Stelle verjüngt hat. Das Implantat wird dabei je nach Alveolarkammbreite so eingesetzt, dass der grössere Querschnittsradius in mesio/distaler oder oral/vestibulärer Richtung verläuft. Die bekannten Implantate mit ihren relativ grossen Querschnitten in den zum Einsetzen in die Corticalis vorgesehenen Bereichen konnten in solchen Fällen nur äusserst selten eingesetzt werden.

Bevorzugt wird das erfindungsgemässe Implantat als sogenanntes «Spätimplantat» eingesetzt, d.h.: nach der Extraktion wird zunächst die Regeneration des Knochengewebes abgewartet und anschliessend eine Bohrung angelegt, deren Durchmesser in etwa dem Maximaldurchmesser des auf den Kugelabschnitt folgenden Abschnittes entspricht. Jedoch ist diese Implantationsmethode nicht zwingend und das Implantat kann in geeigneten Fällen auch als Sofortimplantat eingesetzt werden.

Die nachfolgenden Figuren dienen der näheren Erläuterung der Erfindung, ohne dass die Erfindung auf die gezeigten Ausführungsformen beschränkt ist.

Es zeigen:

Fig. 1 eine Seitenansicht im Teilschnitt des erfindungsgemässen Kieferimplantates, bei der in vereinfachter Form einseitig Corticalis und Schleimhautgewebe dargestellt sind;

Fig. 2 die Aufsicht auf das erfindungsgemässe Kieferimplantat; (Pfeil II)

Fig. 3 einen Schnitt in der Ebene III-III der Fig. 1;

Fig. 4 einen Schnitt in der Ebene IV-IV der Fig. 1;

Fig. 5 einen Schnitt in der Ebene V-V in Fig. 1.

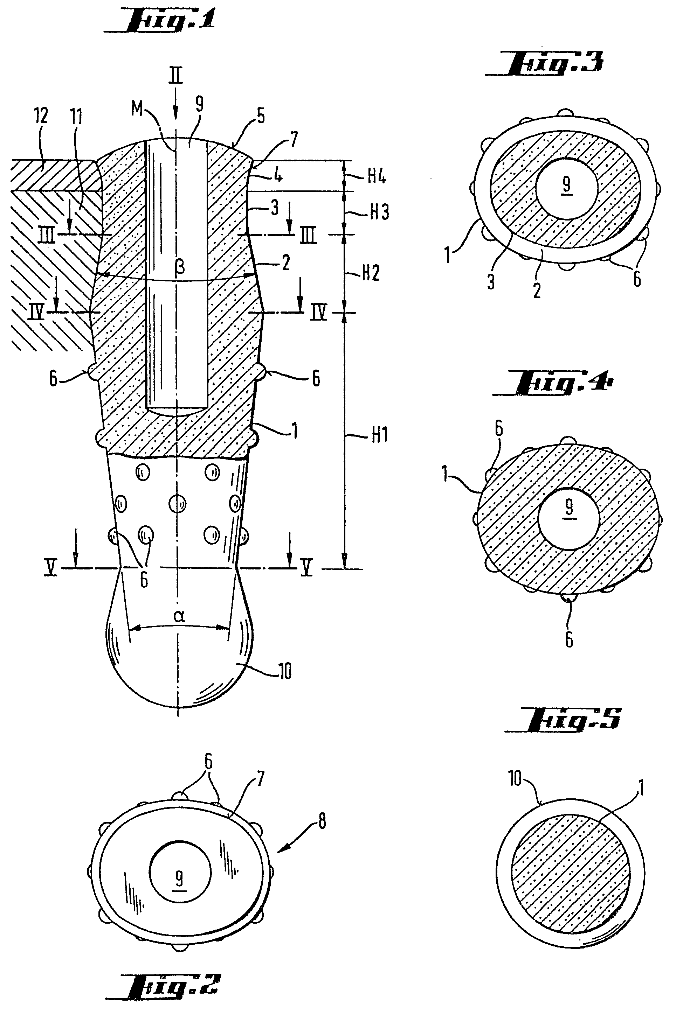

Fig. 1 zeigt ein aus hochreinem Aluminiumoxid hergestelltes erfindungsgemässes Kieferimplantat 8, das an seinem apikalen Ende einen Kugelabschnitt 10 aufweist. Der Kugelabschnitt 10 geht in den ersten kegelstumpfförmigen Abschnitt 1 mit einem Öffnungswinkel alpha = 13 Grad und einer Höhe H1 von 9 mm über. Im Abschnitt 1 sind halbkugelförmige Noppen 6 ausgebildet. Der Abschnitt 1 hat seine grösste Querschnittsfläche im Bereich der Ebene IV-IV, bevor er in den zweiten kegelstumpfförmigen Abschnitt 2 mit einer Höhe H2 von 3 mm übergeht. An den Abschnitt 2 schliesst der zylindrisch ausgebildete Abschnitt 3, der zur Anlagerung der Corticalis 11 vorgesehen ist, an. Der Abschnitt 3 hat eine Höhe H3 von 1,5 mm und geht übergangslos in den kegelstumpfförmigen Abschnitt 4 mit einer Höhe H4 von 1 mm über. Zur Erzielung eines bündigen Abschlusses ist die Oberseite 5 des Abschnittes 4 mit einem Radius von R = 5 cm abgerundet. Das Implantat 8 ist so eingesetzt, dass die beschriebene Abrundung über die Schleimhaut 12 hinausragt, wodurch nach Montage des nicht gezeigten Zahnträgers die Möglichkeit besteht, den Zahnersatz auf den Zahnersatzträger so aufzumodellieren, dass quasi ein bündiger Abschluss mit der abgerundeten Oberseite 5 besteht. Die Aussenkonturen 7 des Abschnittes 4 sind konvex ausgebildet, d.h.: in Richtung auf die Längsachse M des Implantates 8 gebogen. Der Öffnungswinkel beta des Abschnittes 2 beträgt 19 Grad.

Fig. 2 zeigt in der Aufsicht die Bohrung 9 zur Aufnahme eines Zahnträgers, der mit seinem Zapfen in der Bohrung 9 befestigt wird. Die Fig. 2 und die nachfolgenden Fig. 3 und 4 zeigen die im Querschnitt gesehen elliptische Ausbildung in den Abschnitten 4, 3 und 2 bzw. 1. Wie aus Fig. 3 zu erkennen ist, können die Noppen 6 bis unterhalb des zylindrisch ausgebildeten Abschnittes 3 angeordnet sein. Ihre Ausbildung mit halbkugelförmigem Profil verringert das Auftreten von Spannungsspitzen in dem sie umgebenden Knochengewebe.

Wie aus Fig. 5 zu entnehmen ist, geht im Bereich der Ebene V-V der Kugelabschnitt in den kegelstumpfförmigen Abschnitt 1, der einen elliptischen Querschnitt aufweist, über. Der Durchmesser des Kugelabschnittes 10 ist kleiner als der Maximaldurchmesser im Bereich der Ebene IV-IV des Abschnittes 1 bzw. des konvergierenden Abschnittes 2.

**Patentansprüche**

1. Kieferimplantat (8) mit einem auf das apikale Ende folgenden, ersten kegelstumpfförmigen Abschnitt (1), dessen Querschnittsfläche in koronaler Richtung zunimmt, einem zweiten kegelstumpfförmigen Abschnitt (2), der übergangslos auf Abschnitt (1) folgt und dessen Querschnittsfläche in koronaler Richtung abnimmt, einem dritten, sich an diesen Abschnitt anschliessenden, zylindrisch ausgebildeten Abschnitt (3), sowie einem darauf folgenden vierten, kegelstumpfförmigen Abschnitt (4) mit in koronaler Richtung zunehmender Querschnittsfläche, wobei die Höhe des ersten Abschnittes (1) grösser als die des zweiten Abschnittes (2) ist, dadurch gekennzeichnet, dass das apikale Ende des Kieferimplantates (8) aus einem die Grösse einer Halbkugel übertreffenden Kugelabschnitt (10) besteht, dass der zweite Abschnitt (2) eine Höhe H2 von 3 bis 6 mm aufweist, dass der zur Einlagerung in die Corticalis vorgesehene dritte Abschnitt (3) eine Höhe H3 von 1 bis 3 mm aufweist, dass der vierte Abschnitt (4) eine Höhe H4 von 1 bis 2 mm aufweist, dass das Kieferimplantat eine zur Aufnahme eines Zahnträgers vorgesehene Bohrung (9) besitzt und dass jeder der ersten, zweiten, dritten und vierten Abschnitte (1, 2, 3, 4) einen elliptischen Querschnitt aufweist.

2. Kieferimplantat nach Anspruch 1, dadurch gekennzeichnet, dass der an das apikale Ende des Kieferimplantates (8) anschliessende erste kegelstumpfförmige Abschnitt (1) einen Öffnungswinkel alpha von 10 bis 15 Grad aufweist.

3. Kieferimplantat nach einem der Ansprüche 1 und 2, dadurch gekennzeichnet, dass der zweite Abschnitt (2) einen Öffnungswinkel beta von 16 bis 22 Grad aufweist.

4. Kieferimplantat nach einem der Ansprüche 1 bis 3, dadurch gekennzeichnet, dass die Längs- und Querradien im dritten Abschnitt (3) um 10 bis 27% kleiner sind als die maximalen Radien des Bereiches (1).

5. Kieferimplantat nach einem der Ansprüche 1 bis 4, dadurch gekennzeichnet, dass die Längs- und Querradien in den elliptische Querschnitte aufweisenden ersten, zweiten und vierten Bereichen (1, 2, 4) sich um nicht mehr als das 1,3fache voneinander unterscheiden.

6. Kieferimplantat nach einem der Ansprüche 1 bis 5, dadurch gekennzeichnet, dass auf dem ersten Abschnitt (1) Noppen (6) mit kugelabschnittförmigem Profil ausgebildet sind.

7. Kieferimplantat nach einem der Ansprüche 1 bis 6, dadurch gekennzeichnet, dass das Kieferimplantat aus hochreinem Aluminiumoxid besteht.

**Claims**

1. Jaw implant (8) having a frustoconical first portion (1) following on from the apical end, the cross-sectional surface of which first portion increases in the coronal direction, a frustoconical second portion (2) which follows smoothly on from portion (1) and the cross-sectional surface of which decreases in the coronal direction, adjoining this portion a third portion cylindrically formed portion (3), and following thereon a frustoconical fourth portion (4) with a cross-sectional surface that increases in the coronal direction, wherein the height of the first portion (1) is greater than that of the second portion (2), characterised in that the apical end of the jaw implant (8) comprises a ball portion (10) of a size exceeding a hemisphere, the second portion (2) has a height H2 of from 3 to 6 mm, the third portion (3) for inserting in the cortex has a height H3 of from 1 to 3 mm, the fourth portion (4) has a height H4 of from 1 to 2 mm, the jaw implant has a bore (9) provided for receiving a dental support, and each of the first, second third and fourth portions (1, 2, 3, 4) has an elliptical cross-section.

2. Jaw implant according to claim 1, characterised in that the frustoconical first portion (1) adjoining the apical end of the jaw implant (8) has an opening angle α of from 10 to 15 degrees.

3. Jaw implant according to one of claims 1 and 2, characterised in that the second portion (2) has an opening angle β of from 16 to 22 degrees.

4. Jaw implant according to one of claims 1 to 3, characterised in that the longitudinal and transverse radii in the third portion (3) are from 10 to 27% smaller than the maximum radii of the region (1).

5. Jaw implant according to one of claims 1 to 4, characterised in that the longitudinal and transverse radii in the first, second and fourth regions (1, 2, 4) having elliptical cross-sections differ from one another by not more than a factor of 1.3.

6. Jaw implant according to one of claims 1 to 5, characterised in that nubs (6) having a profile in the shape of a spherical segment are formed on the first portion (1).

7. Jaw implant according to one of claims 1 to 6, characterised in that the jaw implant is made of high purity aluminium oxide.

## Revendications

1. Implant maxillaire (8) comportant une première section tronconique (1) se raccordant à l'extrémité apicale et dont la section transversale croît en direction coronaire, une deuxième section tronconique (2) qui se raccorde sans transition à la première section (1) et dont la section transversale décroît en direction coronaire, une troisième section cylindrique (3) se raccordant à cette deuxième section, ainsi qu'à la suite de cette troisième section une quatrième section tronconique (4) avec une section transversale augmentant en direction coronaire, la hauteur de la première section (1) étant plus importante que celle de la deuxième section (2), caractérisé en ce que l'extrémité apicale de l'implant maxillaire (8) est constituée d'un segment sphérique (10) supérieur à un hémisphère, en ce que la deuxième section (2) présente une hauteur H2 de 3 à 6 mm, en ce que la troisième section (3) prévue pour l'insertion dans le tissu cortical présente une hauteur H3 de 1 à 3 mm, en ce que la quatrième section (4) présente une hauteur H4 de 1 à 2 mm, en ce que l'implant maxillaire possède un trou (9) pour recevoir un support de prothèse dentaire et en ce que chacune des première, deuxième, troisième et quatrième sections (1, 2, 3, 4) présente une section transversale elliptique.

2. Implant maxillaire selon la revendication 1, caractérisé en ce que la première section tronconique (1) se raccordant à l'extrémité apicale de l'implant maxillaire (8) présente un angle d'ouverture alpha compris entre 10 et 15 degrés.

3. Implant maxillaire selon l'une des revendications 1 et 2, caractérisé en ce que la deuxième section (2) présente un angle d'ouverture bêta compris entre 16 et 22 degrés.

4. Implant maxillaire selon l'une des revendications 1 à 3, caractérisé en ce que les rayons longitudinal et transversal dans la troisième section (3) sont inférieurs de 10 à 27% aux rayons maxima dans la première section (1).

5. Implant maxillaire selon l'une des revendications 1 à 4, caractérisé en ce que les rayons longitudinal et transversal dans les première, deuxième et quatrième sections (1, 2, 4) présentant des sections transversales elliptiques ne diffèrent pas l'un de l'autre de plus de 1,3 fois.

6. Implant maxillaire selon l'une des revendications 1 à 5, caractérisé en ce que des tétons (6) ayant un profil en forme de segment sphérique sont réalisés sur la première section (1).

7. Implant maxillaire selon l'une des revendications 1 à 6, caractérisé en ce que l'implant maxillaire est en oxyde d'aluminium de grande pureté.

**Fig.1**

**Fig.3**

**Fig.4**

**Fig.5**

**Fig.2**